# EUROPEAN PATENT APPLICATION

(11) **EP 4 336 948 A2**
(43) Date of publication of application: **13.03.2024**
(21) Application number: 23195903.2
(22) Date of filing: 07.09.2023
(51) Int. Cl.: H04W 74/0808, H04W 92/18

(54) **TRANSMISSION METHODS OF SIDELINK ON UNLICENSED SPECTRUM**

(30) Priority: 08.09.2022 WO PCT/CN2022/117800; 30.08.2023 CN 202311108343
(71) Applicant: MediaTek Singapore Pte. Ltd., Singapore 138628 (SG)
(72) Inventor: CHENG, Junqiang, Beijing (CN); CHEN, Tao, Beijing (CN)
(74) Representative: Patentship Patentanwaltsgesellschaft mbH

(57) **Abstract**

Apparatus and methods are provided for SL-U resource allocation and usage. In one novel aspect, one or two candidate starting symbols are configured (801). In one embodiment, the candidate starting symbols are preconfigured for AGC or a repetition of PSCCH/PSSCH data. In one embodiment, CAPC value is mapped from a PQI with a bitmap or a mapping table. The CAPC value is mapped from the PQI based on one or more elements comprising a resource type, a default priority level, a packet delay budget (PDB) requirement, and packet data error rate. In one novel aspect, multi-consecutive-slot (MCSt) resources are reserved for SL-U by applying one or more resource selection rules, comprising selecting, by a MAC layer, resources excluded by a PHY layer in an exclusion step, increasing one or more selection thresholds comprising a resource exclusion RSRP threshold, a remaining resource portion after resource exclusion threshold, and a RSRP threshold.

## Description

### TECHNICAL FIELD

The disclosed embodiments relate generally to wireless communication, and, more particularly, to transmission for sidelink communication on unlicensed spectrum.

### BACKGROUND

Sidelink (SL) communication was introduced to enable direct transmission between two user equipment (UEs), which is also known as the device-to-device (D2D) communications. With the development of 3GPP normative works, the scenarios of sidelink are extended to UE-to-network relay, public safety, vehicle-to-everything (V2X) communications and so on. The critical role of sidelink in long term evolution (LTE) and the new radio (NR) has made it an inevitable remedy to support diverse use cases of future wireless communications.

To meet the increased demands of wireless data traffic, using unlicensed frequency bands has drawn a lot of attention in the wireless industry to improve the capacity of future wireless communication systems. The utilization of unlicensed spectrum for sidelink communications is regarded as the most promising direction for further development of sidelink communication. To occupy the unlicensed frequency bands for sidelink (SL-U) transceiving, the UE must perform channel sensing, such as listen-before-talk (LBT) procedure. The sensing procedure poses additional requirement for the sidelink transceiving and requires the SL-U resource allocation and usages to be more efficient.

Improvements and enhancements are required for sidelink resource allocation and resource usage in unlicensed frequency bands.

### SUMMARY

Apparatus and methods are provided for SL-U resource allocation and resource usage. In one novel aspect, more than one candidate starting symbols for the SL-U transceiving. In one embodiment, two candidate starting symbols within one slot for the SL-U. In one embodiment, the two candidate starting symbols are preconfigured per bandwidth part (BWP) or per system. In one embodiment, the candidate starting symbols are preconfigured for automatic gain control (AGC). In another embodiment, a repetition of prepared transmission block (TB) is transmitted from the candidate starting symbol, and wherein the TB is for a physical sidelink control channel (PSCCH) or a physical sidelink shared channel (PSSCH). In one embodiment, a cyclic prefix extension (CPE) is transmitted between an end of the LBT and the candidate starting symbol. In another embodiment, a length and a starting position of the LBT is preconfigured or indicated to the UE based on a channel access priority class (CAPC) value of the SL transceiving. In one embodiment, the UE ignores control signals on a candidate starting symbol in a time slot when the UE detects and decodes a control signal in the time slot in another symbol of the time slot.

In one embodiment, CAPC value is mapped from a PC5 quality of service (QoS) indicator (PQI). The CAPC value is mapped from the PQI based on one or more elements comprising a resource type, a default priority level, a packet delay budget (PDB) requirement, and packet data error rate. In one embodiment, a bitmap or a table is configured for the mapping between the CAPC value and the PQI.

In one novel aspect, multi-consecutive-slot (MCSt) resources are reserved for SL-U by applying one or more resource selection rules. In one embodiment, the one or more resource selection rules comprising selecting, by a MAC layer, resources excluded by a PHY layer in an exclusion step, indicating, by MAC layer, the number of slots for MCSt, updating RSRP threshold calculation to achieve higher RSRP threshold for a lower CAPC value or for a higher L1 priority (e.g., an additional increment to legacy RSRP threshold can be 8*n/6*n /4*n /2*n dB for CAPC value of 1/2/3/4, respectively and n is by preconfiguration), increasing one or more selection thresholds comprising a resource exclusion reference signal received power (RSRP) threshold, a remaining resource portion after resource exclusion threshold, and a RSRP threshold. In one embodiment, a first stage sidelink control information (SCI) schedules more than one slot for the reserved MCSt resources. In another embodiment, one or more guard symbols for corresponding one or more time slots in the MCSt resources is used for physical sidelink control channel (PSCCH) data or physical sidelink shared channel (PSSCH) data. In one embodiment, one or more guard symbols for corresponding one or more time slots in the MCSt resources is used for physical sidelink control channel (PSCCH) data or physical sidelink shared channel (PSSCH) data by rate matching of a transport block (TB) in the same slot of the guard symbol or by CPE of the TB in the next slot after the slot of the guard symbol. In another embodiment, a guard symbol in a last time slot of the MCSt resources is used for CPE.

In another novel aspect, UE obtains a PC5 quality of service (QoS) indicator (PQI) for a sidelink (SL) connection in a wireless network. UE derives a channel access priority class (CAPC) value based on the PQI. UE determines channel access procedure related parameters based on the CAPC value.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates a schematic system diagram illustrating an exemplary wireless network for sidelink data communication in unlicensed frequency bands with multiple candidate starting symbols and MCSt resources configured in accordance with embodiments of the current invention.
Figure 2 illustrates an exemplary top-level diagram for the SL-U transceiving configured with multiple starting symbol configuration and resource selection in accordance with embodiments of the current invention.
Figure 3 illustrates exemplary diagrams of SL-U resource blocks with multiple candidate starting symbol and MCSt resource allocations in accordance with embodiments of the current invention.
Figure 4 illustrates exemplary diagrams for multiple candidate starting symbols configuration and usages for SL-U transceiving in accordance with embodiments of the current invention.
Figure 5 illustrates exemplary diagrams for CAPC mapping from PQI for SL transceiving in accordance with embodiments of the current invention.
Figure 6 illustrates an exemplary diagram for UE receiving and decoding control channel for SL-U traffic with multiple candidate starting symbols configured in accordance with embodiments of the current invention.
Figure 7 illustrates an exemplary diagram for MCSt resource reservation and usages in accordance with embodiments of the current invention.
Figure 8 illustrates an exemplary flow chart for SL-U transceiving with multiple candidate starting symbols and MCSt resources configured in accordance with embodiments of the current invention.
Figure 9 illustrates an exemplary flow chart for SL-U transceiving with MCSt configured in accordance with embodiments of the current invention.
Figure 10 illustrates an exemplary flow chart for mapping PQI to CAPC in accordance with embodiments of the current invention.

### DETAILED DESCRIPTION

Reference will now be made in detail to some embodiments of the invention, examples of which are illustrated in the accompanying drawings.

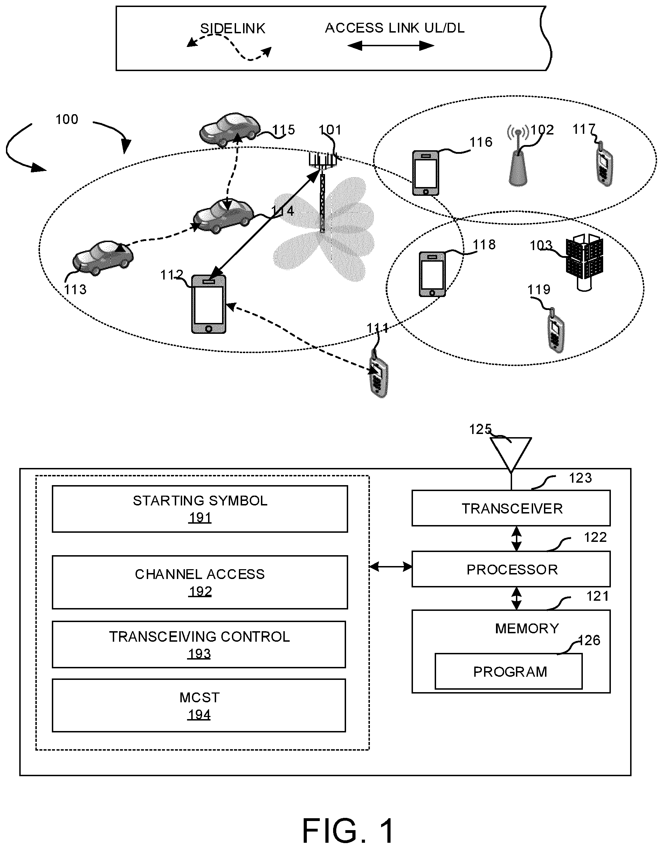

Figure 1 illustrates a schematic system diagram illustrating an exemplary wireless network for sidelink data communication in unlicensed frequency bands with multiple candidate starting symbols and MCSt resources configured in accordance with embodiments of the current invention. Wireless network 100 includes multiple communication devices or mobile stations, such as user equipment (UEs) 111, 112, 113, 114, and 115, which are configured with sidelink in unlicensed frequency bands. The exemplary mobile devices in wireless network 100 have sidelink capabilities. Sidelink communications refer to the direct communications between terminal nodes or UEs without the data going through the network. For example, UE 113 communicates with UE 114 directly without going through links with the network units. The scope of sidelink transmission also supports UE-to-network relay to extend the service range of an eNB/gNB, where the inter-coverage UE acts as the relay node between an eNB/gNB and an out-of-coverage UE. For example, UE 112 is connected with base station 101 through an access link. UE 112 provides network access for out-of-coverage UE 111 through sidelink relay. The base station, such as base station 101, may also be referred to as an access point, an access terminal, a base station, a Node-B, an eNode-B (eNB), a gNB, or by other terminology used in the art. The network can be a homogeneous network or heterogeneous network, which can be deployed with the same frequency or different frequencies. Base station 101 is an exemplary base station. With the demands for more capacity and the development of sidelink communication, it is important for the sidelink devices to use the unlicensed frequency bands and be harmoniously coexistence with devices with other RATs operating in the same unlicensed frequency bands. For example, neighboring UEs 116 and 117 communicate with base station 102 through other RATs, such as Wi-Fi, sharing the same unlicensed frequency band. Neighboring UEs 118 and 119 communicate with base station 103 through other RATs, such as NR, sharing the same unlicensed frequency band.

For sidelink transmissions on the unlicensed spectrum (SL-U), efficient resource allocation is one of the most critical issues to ensure the fair coexistence with other RATs operated in the unlicensed spectrum, such as NR-U and Wi-Fi, etc. Two modes of resource allocation schemes are identified for NR sidelink. The first one is named Mode-1, while the second is Mode-2. For Mode-1, the resource allocation is scheduled by the gNB using the Uu interface. This mode is only suitable for the sidelink UEs in network coverage. For Mode-2, the sidelink UE can autonomously select the resources from a (pre- )configured resource pool(s) based on the channel sensing mechanism over PC5 interface. In this case, the sidelink UEs can operate both under in-coverage and out-of-coverage. When a transmitting sidelink UE attempts to select/reserve resources with Mode-2, it should conduct the resource selection/reservation procedures, which include two stages: resource sensing and resource selection/reservation. Generally, in the resource sensing stage, to avoid causing interference to the existing sidelink transmissions operated by other sidelink UEs, the candidate resources potentially available for the sidelink transceiving are identified. Next, in the resource selection stage, the sidelink UE can select the candidate resources used for transmission block (TB) transmission with the assistance of the sensing results.

In one novel aspect, one or multiple candidate starting symbols are preconfigured for the SL-U. After the LBT channel access is finished, the UE is configured to start transmission at one of the one or multiple candidate starting symbols within a slot based on preconfiguration or configuration. In one embodiment, two candidate starting symbols are preconfigured. The transmission channel/signal type after LBT is finished and/or on the starting position(s)/ symbol(s) is (pre-)configured. In one embodiment, AGC is configured for the starting symbol. In one embodiment, the content of the starting symbol is a repetition of physical sidelink control channel (PSCCH), physical sidelink shared channel (PSSCH), and/or a repetition of (dummy) data, and/or a repetition of preamble. The (pre- )configuration signaling can be transmitted via SIB and/or (PC5-) RRC and/or (PC5-) MAC-CE and/or DCI and/or SCI.

In another novel aspect, the downlink (DL) channel access priority class (CAPC) table and/or uplink (UL) CAPC table is (pre- )configured for SL-U according to the role of the COT initiator, and/or the purpose of the initiated COT, and/or the network loading/density. For example, if the UE acts as a serving/supervising/anchor/cluster header UE, it may be (pre- )configured and/or indicated to use the DL CAPC table to have a prioritized channel access. Otherwise, if the UE acts as a served/supervised/client/cluster member UE, it may be (pre-)configured and/or indicated to use the UL CAPC table to have a deprioritized channel access. Further, the CAPC value can be determined according to the PQI and/or L1 priority according to QoS parameter of the traffic, and/or the number of the supervised/client UE(s) in the case that COT initiator acts as a supervising/anchor UE.

In yet another novel aspect, multiple consecutive slots (MCSt) reservation/transmission is supported for transceiving of the SL-U. In one embodiment, soft/enhanced resource allocation/selection method is used for the MCSt. For example, different RSRP thresholds, and/or remaining resource portion requirements after resource exclusion step, and/or the operations on the excluded resources in MAC layer, etc., are (pre-)configured. The resource selection method/rule is based on different CAPC/priority level, and/or consecutive slots number, and/or network loading, and/or supervised UEs number, etc.

Figure 1 further illustrates simplified block diagrams of a mobile device/UE for operating in the unlicensed frequency band. UE 111 has an antenna 125, which transmits and receives radio signals. An RF transceiver circuit 123, coupled with the antenna, receives RF signals from antenna 125, converts them to baseband signals, and sends them to processor 122. In one embodiment, the RF transceiver may comprise two RF modules (not shown). RF transceiver 123 also converts received baseband signals from processor 122, converts them to RF signals, and sends out to antenna 125. Processor 122 processes the received baseband signals and invokes different functional modules to perform features in UE 111. Memory (or storage medium or computer-readable medium) 121 stores program instructions and data 126 to control the operations of UE 111. Antenna 125 sends uplink transmission and receives downlink transmissions to/from base stations.

UE 111 also includes a set of control modules that carry out functional tasks. These control modules can be implemented by circuits, software, firmware, or a combination of them. A starting symbol module 191 determines one or two candidate starting symbols within a slot for an SL transceiving in the wireless network, wherein the SL transceiving is on sidelink unlicensed frequency bands (SL-U). In one embodiment, in determining one or two candidate starting symbols, UE determines the one or two candidate starting symbols based on a received configuration from the network, wherein the configuration configures one or two candidate starting symbols in one slot. In another embodiment, in determining one or two candidate starting symbols, UE configures the one or two candidate starting symbols in one slot. A channel access module 192 performs a channel access (for example, LBT) procedure before the SL-U transceiving to evaluate the channel availability. A transceiving controller 193 starts the SL-U transceiving from one of the one or two configured candidate starting symbols after a success of the channel access procedure. An MCSt module 194 applies one or more resource selection rules to reserve MCSt resources for the SL-U transceiving. In one embodiment, the configured candidate starting symbols are preconfigured.

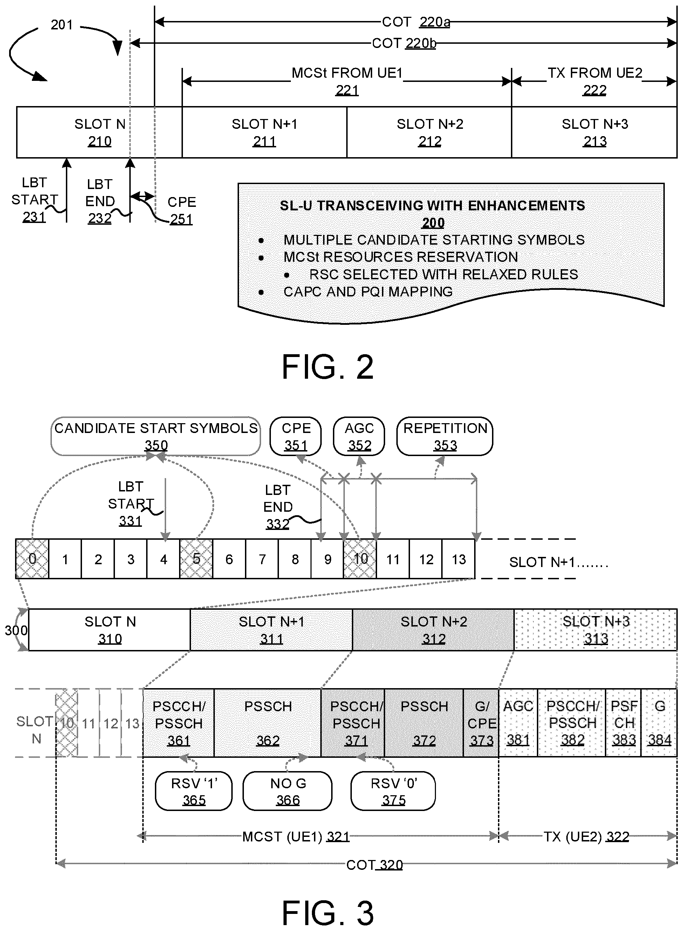

Figure 2 illustrates an exemplary top-level diagram for the SL-U transceiving configured with multiple starting symbol configuration and resource selection in accordance with embodiments of the current invention. In one novel aspect 200, multiple candidate starting symbols are configured for the UE for SL-U transceiving. In one embodiment, MCSt resources are reserved applying resource selection rules. In another embodiment, CAPC is mapped from PQI based on one or more factors. As illustrated, exemplary SL resource blocks 201 includes slot N 210, slot N+1 211, slot N+2 212, and slot N+3 213. UE1 performs LBT at 231 in slot N 210. The LBT succeeds in the same slot N 210 at 232. Upon success of the LBT, channel occupancy time (COT) starts. In one embodiment, the cyclic prefix extension (CPE) 251 is transmitted after the success of LBT. In one embodiment, CPE 251 starts after the success of LBT and CPE 251 is inside the COT (COT 220b). In another embodiment, CPE 251 is transmitted outside the COT (COT 220a). In one embodiment, the SL-U transceiving is configured to start in more than one candidate starting symbols. The SL-U transceiving starts after CPE 251 in slot N 210. COT 220a or COT 220b includes three slots with MCSt 221 for UE1 including slot N+1 211 and slot N+2 212, and slot N+3 213 for another UE, UE2, for SL-U transceiving 222. In one embodiment, a cyclic prefix extension (CPE) randomly selected from a CPE candidate starting position set is transmitted before the candidate starting symbol to achieve symbol level alignment with a preconfigured maximum CPE length, wherein the CPE candidate starting position set is preconfigured per channel access priority class (CAPC) or L1 priority of the SL transceiving.

Figure 3 illustrates exemplary diagrams of SL-U resource blocks with multiple candidate starting symbols and MCSt resource allocations in accordance with embodiments of the current invention. Exemplary SL resources 300 include slot N 310, slot N+1 311, and slot N+2 312. In one embodiment, multiple candidate starting symbols are configured for the UE. The expanded view of slot N 310 has 14 symbols #0 to #13. As an example, #0, #5, and #10 are configured as candidate starting symbols 350. At step 331, LBT channel access starts at symbol #4 of slot N 310 and ends (332) at a middle position/occasion within symbol #9 of slot #N 310. The candidate starting symbols used for control signal/channel can be same or different in different slots as (pre-)configuration. For example, for the slot that LBT is finished, the control signal/channel can be transmitted on the starting symbol nearest to the LBT end as (pre-)configuration. For the other slot(s) within the remaining COT, the control signal/channel can be transmitted on the first (starting) symbol of the slot as (pre- )configuration. In one embodiment, COT 320 starts after the success of LBT. Considering symbol #9 is not the (pre-)configured starting symbol, UE1 will execute CPE operation 351 to align the boundary of symbol #10. Then an AGC symbol 352 is transmitted on symbol #10, and (dummy) or repetition data 353 is transmitted from symbol #11 to symbol #13 to retain the channel. For slot N+1 311, considering the AGC symbol has already been transmitted at slot N 310, it is (pre- )configured no AGC symbol at the beginning of slot N+1 311 to improve spectrum efficiency. As an example, MCSt 321 is reserved for UE1 including slot N+1 311 and slot N+2 312. Slot N+1 311 includes PSCCH/PSSCH 361 and PSSCH 362. Slot N+2 312 includes PSCCH/PSSCH 371, PSSCH 372 and Guard/CPE 373. Slot N+3 313 is used by UE2 (322), includes AGC 381, PSCCH/PSSCH 382, PSFCH 383 and Guard 384.

In one embodiment, a first stage sidelink control information (SCI) schedules more than one slot for the reserved MCSt resources. As illustrated, the reserved/additional bit 365 in 1^{st} SCI (PSCCH) of slot N+1 311 is "1", which means the 1^{st} SCI in slot N+1 311 will jointly indicate the data signal/channel (i.e., PSSCH) in both slot N 310 and slot N+1 311 as described previously. Additionally, slot N+1 311 and slot N+2 312 are occupied by the same UE1, thus slot N+1 311 and slot N+2 312 are multiple consecutive slots transmission (MCSt) 321. Correspondingly, there is no guard symbol at the end of slot N+1 311 and no AGC symbol (366) at the start of slot N+2 312. In one embodiment, the AGC symbol/position is (pre-)configured. In one embodiment, when MCSt resources are reserved, the AGC is (pre- )configured to be only transmitted at the first symbol of the first slot. In one embodiment, when MCSt resources are reserved, a guard symbol in a last time slot of the MCSt resources, such as resource 373, is used for CPE.

In one embodiment, one control signal is configured to indicate one and/or multiple data signal(s) within partial slot, or one or more slots. This indication can be (pre-)configured with one or two additional/reserved bit(s) in control signal/channel (e.g., the 1^{st} SCI). For example, if the additional new bit in 1^{st} SCI is "0", it represents that the control signal indicates the data signal within the current slot. If the additional bit in 1^{st} SCI is "1", it represents that the control signal jointly indicates both data signals within the current slot and the next slot and/or the previous slot. As illustrated, the reserved/additional bit in 1^{st} SCI (PSCCH) 375 of slot N+2 312 is set to be '0', which means the 1^{st} SCI in slot N+2 312 only indicates the data signal/channel (i.e., PSSCH) in the current/corresponding slot (i.e., slot N+2 312). Additionally, in this example, slot N+3 313 is shared by UE1 to another UE2. A guard symbol 373 is (pre-)configured at the end of slot N+2 312. Meanwhile, to retain the channel, CPE operation (occupy full guard symbol or partial guard symbol) 373 is (pre-)configured at the guard symbol of slot N+2 312 to retain the channel. Besides, the AGC symbol 381 in slot N+3 313 is (pre-)configured for the transmission of UE2. Considering there is only single slot transmission of UE2 and it is the last slot within the COT, the guard symbol is (pre-)configured at the end of slot N+3 313 and the CPE operation is not (pre-)configured at the guard symbol of slot N+3 313.

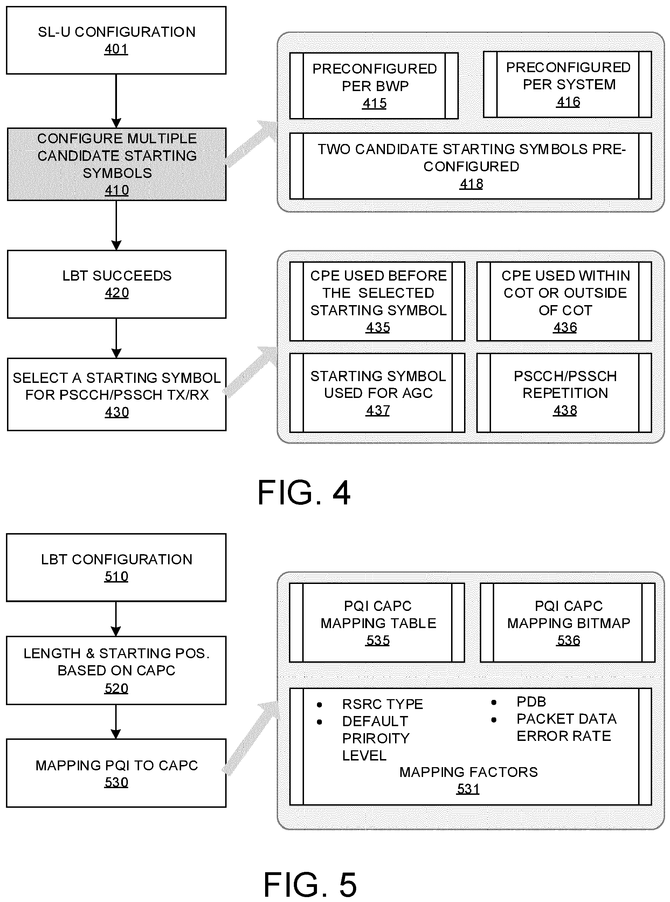

Figure 4 illustrates exemplary diagrams for multiple candidate starting symbols configuration and usages for SL-U transceiving in accordance with embodiments of the current invention. In one novel aspect, more than one candidate starting symbol is configured within a slot for the SL-U transceiving. At step 401, the UE performs SL-U configuration. In one embodiment, at step 410, more than one candidate starting symbols within a slot are configured. In one embodiment 415, the multiple candidate starting symbols are configured per bandwidth part (BWP). In another embodiment 416, the multiple candidate starting symbols are configured per system. In one embodiment 418, two candidate starting symbols are preconfigured. Before the UE can access the unlicensed channels, it should perform LBT channel access. At step 420, LBT channel access is finished, the UE can start transmission on the channel at (pre-)configured starting position(s)/symbol(s). One and/or multiple starting symbol(s) within a slot can be (pre-)configured for the UE to start transmission. Additionally, one and/or multiple starting position(s)/occasion(s) within a (starting) symbol can be (pre-)configured for the UE to start transmission.

At step 430, the UE selects a starting symbol for PSCCH/PSSCH transceiving. In one embodiment 435, the UE can be (pre-)configured to use CPE operation and/or preamble to start a transmission after LBT channel access is finished in the level of microsecond. In another embodiment, the CPE and/or preamble length and/or trigger position can be (pre-)configured and/or indicated based on the CAPC value and/or PQI and/or the QoS of the traffic and/or the UE capability. For example, the smaller the CAPC value, the earlier the CPE and/or preamble operation. The transmission time of preamble can be used for processing (e.g., encoding) in parallel. In one embodiment 436, the CPE is transmitted within the COT or outside the COT. Additionally, a finer LBT sensing comprised of several finer sensing granularities (e.g., 9us sensing granularity) can be (pre-)configured within a symbol. Different UEs can be (pre-)configured with different finer LBT sensing lengths and start finer LBT sensing at different positions within a symbol. Consequently, the UE can start transmission at different positions within a symbol. The length of the finer LBT sensing (i.e., the number of the finer sensing granularity involved in the finer LBT sensing), and/or the trigger time/position of the finer LBT sensing can be (pre-)configured and/or indicated based on the CAPC value and/or PQI and/or QoS of the traffic. For example, the smaller the CAPC value, the shorter the finer LBT sensing and/or the earlier the finer LBT sensing.

In one embodiment 437, the starting symbol is used for AGC. In another embodiment, the transmission channel/signal type after LBT is finished and/or on the starting symbol(s) is (pre-)configured as PSCCH and/or PSSCH and/or AGC and/or (dummy) data and/or a preamble. In one embodiment 438, the contents of the starting symbol is repetition data of the PSCCH /PSSCH. The content of AGC symbol is configured as a repetition of PSCCH/PSSCH, and/or a repetition of (dummy) data, and/or a repetition of preamble. The (pre- )configuration signaling can be transmitted via SIB and/or (PC5-)RRC and/or (PC5-)MAC-CE and/or DCI and/or SCI. For the case that AGC symbol is transmitted at a middle symbol of the slot after LBT is finished, the AGC symbol in the following *N1* slot(s) can be omitted as (pre-)configuration. The value of *N1* can be (pre-)configured.

Figure 5 illustrates exemplary diagrams for CAPC mapping from PQI for SL transceiving in accordance with embodiments of the current invention. At step 510, the UE performs LBT configuration. In one embodiment 520, the length and starting position of the LBT is based on CAPC. DL CAPC table and/or UL CAPC table is (pre-)configured for SL-U. Different CAPC tables are (pre-)configured and/or indicated in one or more manners including per UE, per group, per cluster, per resource pool, and per RB set. The CAPC tables are indicated via one or more signaling including SIB, PC5 RRC, RRC, PC5 MAC-CE, MAC-CE, DCI, and SCI. The CAPC table (pre-)configuration is based on the role of the COT initiator, and/or the purpose of the initiated COT, and/or the network loading/density. For example, if the UE acts as a serving/ supervising/ scheduling/ anchor/ cluster header UE, it may be (pre-)configured and/or indicated to use the DL CAPC table to have a prioritized channel access. Otherwise, if the UE acts as a served/ supervised/ scheduled/ client/ cluster member UE, it may be (pre- )configured and/or indicated to use the UL CAPC table to have a deprioritized channel access. Additionally, for the serving/ supervising/ scheduling/ anchor/ cluster header UE, it may be (pre- )configured to use DL CAPC table if the number of the served/ supervised/ scheduled/ client/ cluster member UE(s) larger than the corresponding threshold(s). Otherwise, a UL CAPC table may be (per- )configured. Additionally, if the network loading/density and/or the CBR are lower than a (pre-)configured threshold(s), the UE may be (pre-)configured and/or indicated to use the DL CAPC table.
Otherwise, if the network loading/density and/or the CBR are higher than a (pre-)configured thresholds(s), the UE may be (pre-)configured and/or indicated to use the UL CAPC table. Additionally, if the COT is initiated to be (constantly) shared with several UEs larger than the (pre-)configured threshold(s), DL CAPC table may be (pre- )configured. Otherwise, UL CAPC table may be (pre-)configured.

In one embodiment 530, the CAPC value is determined according to the PQI and/or L1 priority of the traffic. In one embodiment 535, a mapping table of CAPC and PQI is configured. In another embodiment 536, the PQI and CAPC is mapped via a bitmap. In one embodiment 531, one or more mapping elements are used for the CAPC and PQI mapping. The one or more mapping elements include a resource type, a default priority level, a packet delay budget (PDB) requirement, and packet data error rate. For example, the CAPC can be indirectly mapped from PQI and/or L1 priority with 5QI as an intermediary, and/or directly mapped from PQI and/or L1 priority with a new mapping relation between CAPC and PQI and/or L1 priority. The mapping relation is based on one or more factors including signal, channel type, resource type, default priority level, PDB requirement, packet error rate, default maximum data burst volume, default averaging window, and covering range. When the UE acts as a serving UE, the CAPC value may be determined based on the total number of the served member UE(s). For example, if the total number of the served UE(s) larger than the threshold(s), a corresponding lower CAPC value(s) can be used. A bitmap and/or table can be (pre-)configured to indicate the mapping relation between CAPC value and PQI/L1 priority and/or the total number of the served UE(s). Additionally, the CAPC value for the serving UE can be (pre- )configured as the highest and/or lowest and/or a random value from the CAPC value set of all the served UE(s). In one embodiment, a contention window size of the channel access procedure (for example, LBT) and a maximum COT length after a successful channel access procedure is preconfigured or indicated to the UE based on a channel access priority class (CAPC) value of the SL transceiving.

Based on the mapping factors, mapping table is configured. As an example, the mapping table includes mapping PQI 90/91/92/93/21/22/23/55/56/57/58 to CAPC priority class 1; Mapping PQI 59/61 to CAPC priority class 3; Mapping PQI 25 to CAPC priority class 2; and Mapping PQI 24/26/60 to CAPC priority class 1.

In another aspect of the disclosure, the contention window (CW) value can be chosen from a (pre-)configured CW set for each CAPC value. The set can be determined according to the role of the COT initiator, and/or the purpose of the initiated COT, and/or the network loading/density. For example, The CW set of each CAPC value in Rel-16/Rel-17 NR-U and/or ETSI can be divided into N sub-set as (pre- )configuration, e.g., a lower CW sub-set with relatively small CW value and an upper CW sub-set with relatively large CW value. The value of N can be (pre-)configured. Next, if the UE acts as a serving/supervising/scheduling/anchor/cluster header UE, and/or the COT is initiated to be (constantly) shared with a number of UEs larger than (pre-)configured thresholds, and/or the network loading/density and/or the CBR is lower than (pre-)configured thresholds(s), the UE may (pre-)configured to set CW value from the lower CW sub-set to have a prioritized channel access. Otherwise, the UE may (pre-)configured to set CW value from the upper CW sub-set to have a deprioritized channel access. The similar principle can also be applied to the random counter generation in LBT channel access procedure.

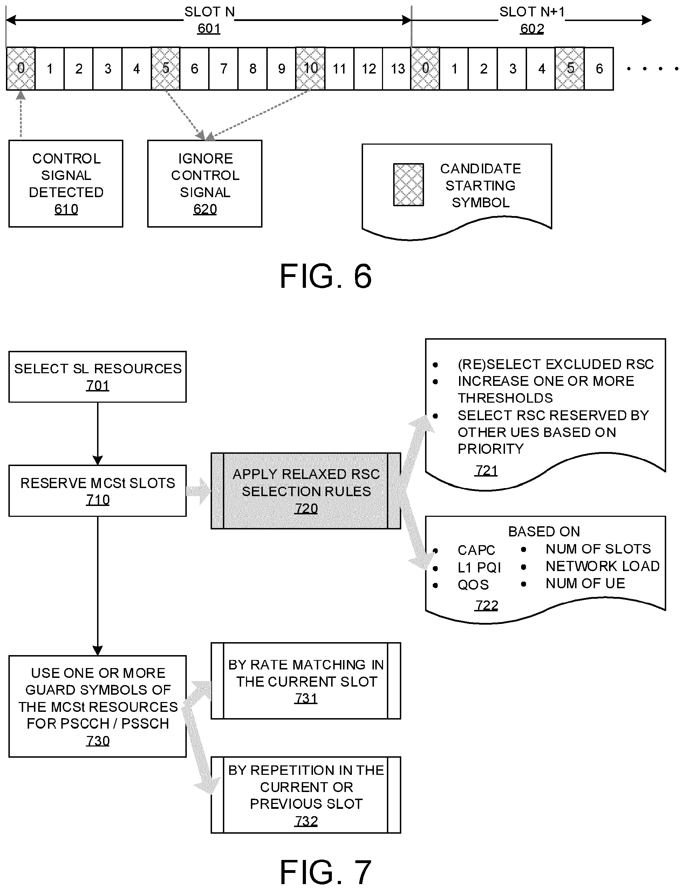

Figure 6 illustrates an exemplary diagram for UE receiving and decoding control channel for SL-U traffic with multiple candidate starting symbols configured in accordance with embodiments of the current invention. In one embodiment, the UE ignores control signals on a candidate starting symbol in a time slot when the UE detects and decodes a control signal in the time slot in another symbol of the time slot. In one embodiment, when more than one candidate starting symbols within a slot are (pre-)configured, the control signal/channel can be (pre-)configured to be sent at multiple fixed symbols and/or at each starting symbols. For example, slot N 601 and slot N+1 602 are two consecutive slots for a SL resource. More than one candidate starting symbols, such as symbol #0, #5, and #10, are configured. In this case, the UE can be (pre-)configured to monitor control signal at one starting symbol, or multiple starting symbols, or at each starting symbol within a slot as (pre-)configuration. When the UE is (pre- )configured to monitor more than one starting symbols, such as symbols #0, #5, and #10, the UE only decodes (the first) M control signal(s) in one slot as (pre-)configuration. For example, the UE can be (pre- )configured to only decode one control signal in each starting symbol. At step 610, the UE detects control signal. At step 620, the UE ignores possible control signals at symbols #5 and #10.

Figure 7 illustrates an exemplary diagram for MCSt resource reservation and usages in accordance with embodiments of the current invention. In one novel aspect, MCSt resources are reserved for SL-U. In one embodiment, the MCSt resources are reserved based on one or more resource selection rules. At step 701, the UE selects SL resources. At step 710, the UE attempts to reserve MCSt resources. In one embodiment 720, the UE applies one or more resource selection rules.

In one embodiment 721, the one or more selection rules include indicating, by MAC layer, the number of slots for MCSt, selecting, by the MAC layer, resources excluded by a PHY layer in an exclusion step, increasing, by PHY layer, one or more selection thresholds comprising a resource exclusion reference signal received power (RSRP) threshold, a remaining resource portion after resource exclusion threshold, and a RSRP threshold. The one or more selection rules further include selecting SL resources reserved by other UEs based on priority information. In one embodiment 722, the one or more resource selection rules are based on one or more factors including CAPC value, L1 priority, QoS, Number of slots allocated, network load, and number supervised UEs.

In one embodiment, a soft resource allocation method from the point of PHY layer and/or MAC layer is (pre-)configured. For example, SL RSRP threshold(s) in the resource allocation procedure is (pre- )configured based on one or more factors including CAPC value and/or PQI and/or L1 priority and/or the QoS of the traffic and/or the total number of multiple consecutive slot(s) and/or the network loading and/or the supervised UE(s) number. For example, a correction factor *α* (dB) can be added to the Rel-16/Rel-17 SL resource allocation RSRP threshold *Th* to obtain a new RSRP threshold for SL-U resource allocation *Th'* = *Th* + *α.* Then the value of correction factor *α* can be (pre-)configuration. For example, if CAPC value is decreased and/or the number of multiple consecutive transmission slot(s) is increased and/or the network loading is increased and/or the number of the supervised UE(s) is increased, the correction factor can be increased to the next (pre-)configured value. Otherwise, the correction factor can be decreased to the next (pre-)configured value. A bitmap and/or table can be (pre-)configured to indicate the relation between correction factor and the other items like CAPC/priority value, and/or multiple consecutive slots number and/or network loading, and/or supervised UEs number etc.

In one embodiment, one or more resource selection thresholds are adjusted for the resource selection rules. For example, the portion of the candidate single-slot PSSCH resources over the total resources after resource exclusion is (pre-)configured according to one or more factors including the CAPC value, PQI, L1 priority, the QoS of the traffic, the total number of the multiple consecutive slot(s), the network loading, the supervised UE(s) number. For example, larger portion value(s) is added to the Rel-16/Rel-17 SL IE *SL-TxPercentageConfig* to guarantee multiple consecutive slot(s) reservation/ transmission. An example is that the new IE *SL-TxPercentageConfig* is (pre-)configured as ENUMERATED {p20, p35, p50, p65, p80, p95}. In another embodiment, for the remaining resource after resource exclusion less that the value of *SL-TxPercentageConfig,* the RSRP threshold is increased with a value larger than 3dB as (pre- )configuration according to one or more factors including the CAPC value, PQI, L1 priority, the QoS of the traffic, the total number of consecutive slot(s), the network loading, and the supervised UE(s) number. For example, the RSRP threshold is increased by 6dB each time the remaining resource after resource exclusion less that the value of *SL-TxPercentageConfig.* In another embodiment, bitmap and/or table is (pre-)configured to indicate the relation between the remaining resource portion and/or the RSRP threshold increased value and the other items like CAPC/priority value, and/or multiple consecutive slots number and/or network loading, and/or supervised UEs number etc.

In one embodiment, the one or more resource selection rules include selecting, by the MAC layer, resources excluded by a PHY layer in an exclusion step. To reserve multiple (consecutive) slot(s) for transmission, a two-step resource selection method can be (pre- )configure for PHY and MAC layers. For example, for the resource(s) excluded form PHY layer after the exclusion step, the MAC layer can re-select the excluded resource(s) according to the (pre-)configured criterion, and then indicate the re-selected resource(s) to the PHY layer. For example, after resource exclusion in the PHY layer, the related information, such as CAPC value, QoS value of the excluded resource(s) are reported to MAC layer. The MAC layer can re-select the excluded resource(s) based on a criterion. For example, a higher RSRP threshold can be set according to the CAPC value. Then the re-selected resource(s) are indicated to the PHY layer for use and/or for further selection.

In one embodiment, the one or more selection rules further include selecting SL resources reserved by other UEs based on priority information. The UE is (pre-)configured to select the resource(s) reserved by other UE(s) according to the (pre-)configured criterion. For example, if the resources have already been reserved by UE B with a priority P and resource exclusion RSRP threshold *Th1,* then if the traffic of UE A has a higher priority than P, UE A can select the resources reserved by UE B with a same and/or higher resource exclusion RSRP threshold *Th1* as (pre-)configuration. If UE A have a lower priority than P, UE A cannot select the resources reserved by UE B, or it can select the resources reserved by UE B with a lower resource exclusion RSRP threshold *Th2* (i.e., *Th2 < Th1*) as (pre- )configuration.

Once the MCSt resources are reserved, at step 730, the UE uses one or more guard symbols of the MCSt resources for PSCCH/PSSCH data. In one embodiment 731, the guard symbol is used for PSCCH/PSSCH data at the current slot of the replaced guard symbol by rate matching. In another embodiment 732, the guard symbol is used for PSCCH/PSSCH data at the current slot or in a previous slot by repetition.

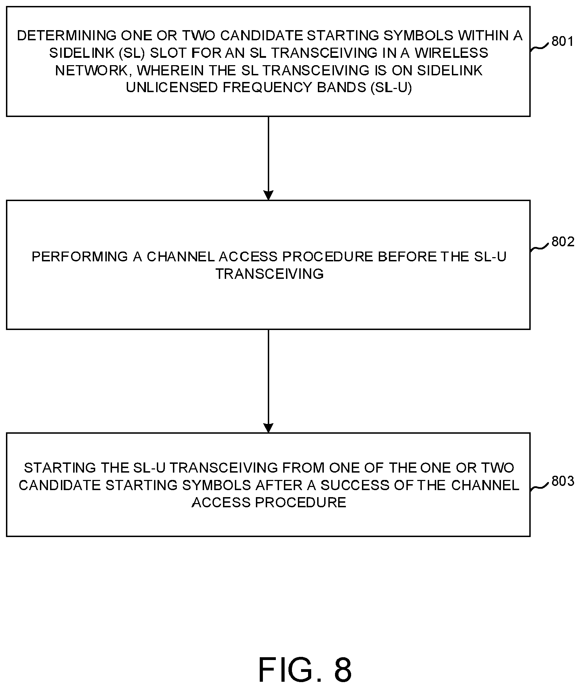

Figure 8 illustrates an exemplary flow chart for SL-U transceiving with multiple candidate starting symbols configured in accordance with embodiments of the current invention. At step 801, the UE determines one or two candidate starting symbols within a slot for an SL transceiving in a wireless network, wherein the SL transceiving is on sidelink unlicensed frequency bands (SL-U). At step 802, the UE performs a channel access procedure before the SL-U transceiving. At step 803, the UE starts the SL-U transceiving from one of the one or two candidate starting symbols after a success of the channel access procedure.

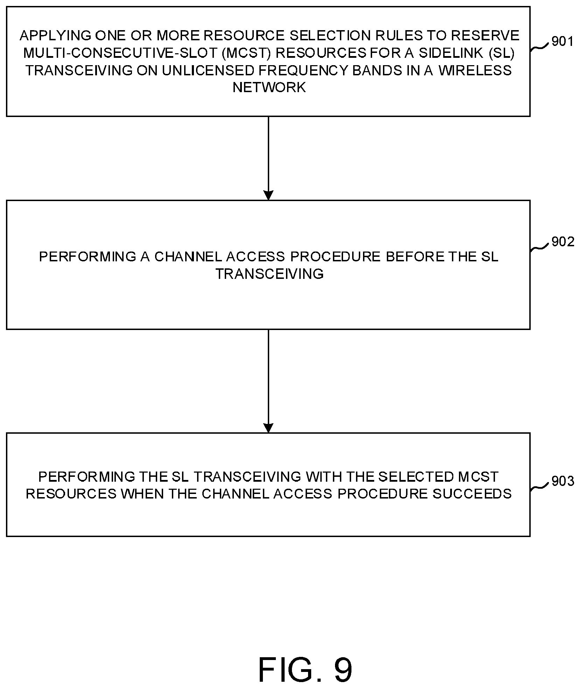

Figure 9 illustrates an exemplary flow chart for SL-U transceiving with MCSt configured in accordance with embodiments of the current invention. At step 901, the UE applies one or more resource selection rules to reserve multi-consecutive-slot (MCSt) resources for a sidelink (SL) transceiving on unlicensed frequency bands in a wireless network. At step 902, the UE performs a channel access procedure before the SL transceiving. At step 903, the UE performs the SL transceiving with the selected MCSt resources when the channel access procedure succeeds.

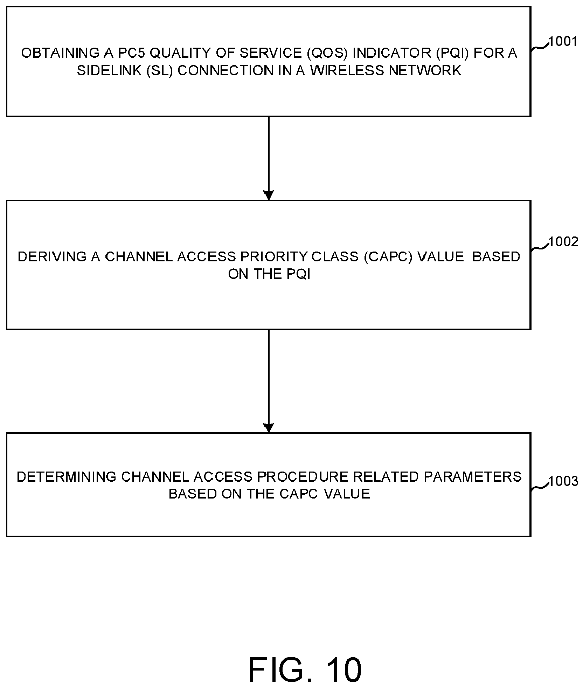

Figure 10 illustrates an exemplary flow chart for mapping PQI to CAPC in accordance with embodiments of the current invention. At step 1001, the UE obtains a PQI for a SL connection in a wireless network. At step 1002, the UE derives a CAPC value based on the PQI. At step 1003, the UE determines channel access procedure related parameters based on the CAPC value.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method for a user equipment (111-115), UE, comprising:
determining (801) one or two candidate starting symbols within a slot for an SL transceiving in a wireless network (100), wherein the SL transceiving is on unlicensed frequency bands, SL-U;
performing (802) a channel access procedure before the SL-U transceiving to evaluate a channel availability; and
starting (803) the SL-U transceiving from one of the one or two candidate starting symbols within the slot after a success of the channel access procedure.

2. The method of claim 1, wherein the two candidate starting symbols are preconfigured per bandwidth part, BWP, or per system.

3. The method of claim 1, wherein the candidate starting symbols are preconfigured for automatic gain control, AGC, purpose.

4. The method of claim 1, wherein a repetition of transport block, TB, is transmitted from a second candidate starting symbol if the channel access procedure succeeds after a first candidate starting symbol and before the second candidate starting symbol of a slot, and wherein the TB is for a physical sidelink control channel, PSCCH, and a physical sidelink shared channel, PSSCH.

5. The method of claim 1, wherein a cyclic prefix extension, CPE, starting position randomly selected from a CPE candidate starting position set is transmitted before the candidate starting symbol to achieve symbol level alignment, wherein the CPE candidate starting position set is preconfigured per channel access priority class, CAPC, or L1 priority of the SL transceiving.

6. The method of claim 1, wherein a contention window size of the channel access procedure and a maximum COT length after a successful channel access procedure is preconfigured or indicated to the UE based on a channel access priority class, CAPC, value of the SL transceiving, wherein the CAPC value is mapped from a PC5 quality of service, QoS, indicator, PQI , wherein the CAPC value is mapped from the PQI based on one or more elements comprising a resource type, a default priority level, a packet delay budget, PDB, requirement, and a packet data error rate, wherein a bitmap or a table is configured for the mapping between the CAPC value and the PQI.

7. The method of claim 1, wherein the UE (111-115) ignores control signals monitoring on a second candidate starting symbol in a time slot when the UE (111-115) detects and decodes a control signal on a first candidate starting symbol in the same time slot.

8. A method for a user equipment (111-115), UE, comprising:
applying (901) one or more resource selection rules to reserve multi-consecutive-slot, MCSt, resources for a sidelink, SL, transceiving on unlicensed frequency bands in a wireless network (100);
performing (902) a channel access procedure before the SL transceiving; and
performing (903) the SL transceiving with the selected MCSt resources when the channel access procedure succeeds.

9. The method of claim 8, wherein the one or more resource selection rules comprising:
indicating, by MAC layer, the number of consecutive slots for MCSt;
increasing one or more selection thresholds comprising a SL resource exclusion reference signal received power, RSRP, threshold, a remaining candidate resource portion over the total resource after resource exclusion; and/or
reselecting, by the MAC layer, resources excluded by a PHY layer in an exclusion step.

10. The method of claim 9, wherein the RSRP threshold calculation, RSRP threshold increment and remaining candidate resource portion over the total resource after resource exclusion are based on a CAPC value, an L1 priority, or the number of consecutive slots for MCSt of the SL transceiving.

11. The method of claim 8, wherein a first stage sidelink control information, SCI, schedules more than one slot in MCSt.

12. The method of claim 8, wherein one or more guard symbols for corresponding one or more time slots in the MCSt resources are used for physical sidelink control channel, PSCCH, or physical sidelink shared channel, PSSCH, by rate matching of a transport block, TB, in the same slot of the guard symbol or by CPE of the TB in the next slot after the slot of the guard symbol.

13. A method, comprising:
obtaining (1001) a PC5 quality of service, QoS, indicator, PQI, for a sidelink, SL, connection in a wireless network (100);
deriving (1002) a channel access priority class, CAPC, value based on the PQI; and
determining (1003) channel access procedure related parameters based on the CAPC value.

14. The method of claim 13, wherein the CAPC value is mapped from the PQI based on one or more elements comprising a resource type, a default priority level, a packet delay budget, PDB, requirement, and a packet data error rate, wherein a bitmap or a table is configured for the mapping between the CAPC value and the PQI.

15. The method of claim 13, wherein a contention window size of the channel access procedure and a maximum COT length after a successful channel access procedure is preconfigured or indicated to the UE based on the CAPC value.
